# EUROPÄISCHE PATENTANMELDUNG

(11) **EP 4 817 899 A1**
(43) Veröffentlichungstag der Anmeldung: **07.10.2026**
(21) Anmeldenummer: 25167818.1
(22) Anmeldetag: 01.04.2025
(51) Int. Cl.: B60G 7/02, B60G 9/00, B60G 11/04, B60G 11/113, B60G 11/27, B60G 13/00

(54) **NUTZFAHRZEUG MIT ACHSAGGREGAT**

(71) Anmelder: Schmitz Cargobull AG, 48341 Altenberge (DE)
(72) Erfinder: SCHLICHTING, Timo, 48429 Rheine (DE); LANNOIJE, Marnix, 48341 Altenberge (DE); ESCHEY, Thomas, 86500 Kutzenhausen (DE)
(74) Vertreter: Cohausz & Florack

(57) **Zusammenfassung**

Beschrieben uns dargestellt ist ein Nutzfahrzeug (1), insbesondere Lastkraftwagen, Anhänger oder Sattelauflieger, mit einem wenigstens einen Längsträger (7) aufweisenden Chassis (6), mit einem mit einem Rad (9) verbundenen Achskörper (8), mit einem den Achskörper (8) gegenüber dem Längsträger (7) abstützenden Federelement (12) und mit einem sich quer zum Achskörper (8) erstreckenden und um eine Schwenkachse (SL) relativ zum Längsträger (7) auf und ab schwenkbaren Längslenker (11), wobei der Längslenker (11) wenigstens indirekt mit dem Längsträger (7), dem Achskörper (8) und dem Federelement (12) verbunden ist und wobei der Längsträger (7) einen unteren Rand (13) auf weist. Um ein besonders stabiles und kostengünstiges Nutzfahrzeug mit einem guten Federungsverhalten bereitstellen zu können, ist vorgesehen, dass die Schwenkachse (SL) des Längslenkers (11) wenigstens im Bereich der Schwenkachse (SL) oberhalb des unteren Rands (13) des Längsträgers (7) angeordnet ist.

## Beschreibung

Die Erfindung betrifft ein Nutzfahrzeug, insbesondere Lastkraftwagen, Anhänger oder Sattelauflieger, mit einem wenigstens einen Längsträger aufweisenden Chassis, mit einem mit einem Rad verbundenen Achskörper, mit einem den Achskörper gegenüber dem Längsträger abstützenden Federelement und mit einem sich quer zum Achskörper erstreckenden und um eine Schwenkachse relativ zum Längsträger auf und ab schwenkbaren Längslenker, wobei der Längslenker wenigstens indirekt mit dem Längsträger, dem Achskörper und dem Federelement verbunden ist und wobei der Längsträger einen unteren Rand aufweist,

Nutzfahrzeuge sind in unterschiedlichen Ausgestaltungen bekannt, etwa in Form von Lastkraftwagen, Anhängern oder Sattelaufliegern. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge meist unterschiedliche Arten von Aufbauten auf, die einen Laderaum umgrenzen, welcher der Aufnahme der zu transportierenden Ladung dient.

So sind beispielsweise sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten beladen zu können. Wenn die wenigstens eine Plane entlang der Seitenwand verschoben werden kann, spricht man auch von sogenannten Curtainsidern.

Neben Planenaufbauten sind sogenannte Kofferaufbauten bekannt. Wie bei Planenaufbauten ist bei Kofferaufbauten die Stirnwand meist als feste Wand ausgebildet und die Rückwand regelmäßig durch zwei Flügeltüren gebildet. Im Gegensatz zu Planenaufbauten sind bei Kofferaufbauten allerdings die Seitenwände und das Dach durch feste Wände verschlossen. Die Seitenwände, das Dach und die Stirnwand sowie bedarfsweise der Boden von Kofferaufbauten sind meist durch Paneele gebildet, die äußere strukturgebende Decklagen und dazwischen eine Kernlage aus geschäumtem Kunststoff umfassen.

Unabhängig von der Art des Aufbaus weisen Nutzfahrzeuge ein Chassis und wenigstens eine daran befestigte Nutzfahrzeugachse als Teil eines Fahrwerks auf, die mit Rädern zum Bewegen des Nutzfahrzeugs verbunden ist. Zur Befestigung der Räder an der Nutzfahrzeugachse weist die Nutzfahrzeugachse für gewöhnlich an ihren gegenüberliegenden Längsenden jeweils ein Radmontageelement auf, bei dem es sich um einen sogenannten Radkopf handeln kann. Die Radmontageelemente sind typischerweise drehbar an der Nutzfahrzeugachse gelagert, so dass ein Abrollen der an den Radmontageelementen befestigten Räder möglich ist. Diese Räder sind grundsätzlich selbst nicht angetrieben.

Zur Anbindung der Nutzfahrzeugachse an das Chassis des Nutzfahrzeugs sind sogenannte Achsaggregate vorgesehen, die ein Teil der Nutzfahrzeugachse umfassen, nämlich einen Achskörper. Bei diesem Achskörper handelt es sich insbesondere um ein Achsrohr der Nutzfahrzeugachse. Das Achsrohr kann sich dabei wenigstens im Wesentlichen über die gesamte Länge der Nutzfahrzeugachse erstrecken oder auch nur einen kurzen Abschnitt der Nutzfahrzeugachse darstellen. Neben dem Achskörper des Achsaggregats weist dieses noch einen sich quer zum Achskörper und damit wenigstens im Wesentlichen in Längsrichtung des Nutzfahrzeugs erstreckenden Längslenker auf. Der Längslenker ist dabei direkt oder indirekt mit dem Achskörper und auf gegenüberliegenden Seiten des Achskörpers einerseits mit einem Achsbock und andererseits mit einem Federelement verbunden. Die Verbindung des Längslenkers mit dem Achsbock ist als Schwenkverbindung ausgebildet, so dass der Längslenker und damit die Nutzfahrzeugachse um eine Schwenkachse um den Achsbock schwenken kann, damit Straßenunebenheiten absorbiert werden können.

Dabei wird das an dem Längslenker angebundene Federelement, das als Federbalg ausgebildet sein kann, abwechselnd komprimiert und wieder auseinandergezogen. Das Federelement ist wie der Achsbock fest mit dem Chassis des Nutzfahrzeugs verbunden. Mithin stützt sich die Nutzfahrzeugachse über den Längslenker unter anderem an dem Achsbock ab, der sich seinerseits wiederum am Chassis, insbesondere einem Längsträger des Chassis, des Nutzfahrzeugs abstützt. Das Chassis des Nutzfahrzeugs umfasst dabei typischerweise zwei Längsträger und eine Vielzahl von die Längsträger miteinander verbindenden, sich quer zu den Längsträgern und dem Nutzfahrzeug erstreckenden Querträger.

Achsaggregate müssen hohe Kräfte aufnehmen können und sollen zugleich kostengünstig sein sowie ein gutes Federungsverhalten ermöglichen. Diese sich teils entgegenstehenden Vorgaben sind bei bestehenden Achsaggregaten noch nicht zufriedenstellend gelöst.

Daher liegt der vorliegenden Erfindung die Aufgabe zugrunde, ein Nutzfahrzeug der eingangs genannten und zuvor näher erläuterten Art derart auszugestalten und weiterzubilden, dass dieses besonders stabil und kostengünstig ist sowie ein gutes Federungsverhalten aufweist.

Diese Aufgabe ist bei einem Nutzfahrzeug nach dem Oberbegriff von Anspruch 1 dadurch gelöst, dass die Schwenkachse des Längslenkers wenigstens im Bereich der Schwenkachse oberhalb des unteren Rands des Längsträgers angeordnet ist.

Durch die Anbindung des Längslenkers an den Längsträger in einer Weise, bei der die Schwenkachse des Längslenkers auf einer Höhe oberhalb des unteren Rands des Längsträgers angeordnet ist, kann auf aus dem Stand der Technik bekannte Achsböcke verzichtet werden, über welche die Schwenkachsen der Längslenker mit den darüber angeordneten Längsträgern des Chassis verbunden worden sind. Die Einsparung von Achsböcken führt zu einer kostengünstigeren Ausgestaltung des Nutzfahrzeugs. Zudem kann die Anbindung des Längslenkers an den Längsträger stabiler und langlebiger ausgebildet werden, wenn auf einen zusätzlichen Achsbock verzichtet wird, der aus Kosten- und Gewichtsgründen nicht besonders materialintensiv ausgebildet werden kann. Der Federungskomfort wird dabei durch den Verzicht auf den Achsbock nicht grundsätzlich nachteilig beeinflusst.

Bei einer ersten besonders bevorzugten Ausgestaltung des Nutzfahrzeugs beträgt der Abstand zwischen der Schwenkachse des Längslenkers und dem unteren Rand des Längsträgers im Bereich der Schwenkachse des Längslenkers in vertikaler Richtung gesehen wenigstens 3 cm, vorzugsweise wenigstens 6 cm, insbesondere wenigstens 9 cm. Dieser Abstand erlaubt eine konstruktiv einfache und zugleich sehr stabile Anbindung des Längslenkers an den zugehörigen Längsträger.

Unabhängig davon ist es besonders zweckmäßig, wenn sich das Federelement gegen den unteren Rand des Längsträgers abstützt. Dies erlaubt das Ableiten von hohen Kräften in den Längsträger, und zwar auf eine konstruktiv einfache Weise.

Dabei bietet es sich ganz grundsätzlich an, wenn das Federelement als Federbalg ausgebildet ist. Ein Federbalg, der auch als Luftfederbalg bezeichnet wird, hat sich in der Praxis bewährt, um eine Luftfederung des Nutzfahrzeugs bereitzustellen.

Zur konstruktiven Vereinfachung des Achsaggregats bietet es sich fernen an, wenn das Federelement wenigstens im Bereich des Federelements wenigstens im Wesentlichen zwischen dem unteren Rand des Längsträgers und dem Längslenker angeordnet ist. Dies ermöglicht eine platzsparende Anordnung des Federelements und erlaubt es zudem hohe Kräfte einfach an den Längsträger abzuleiten.

Zur Dämpfung von Schwenkbewegungen des Längslenkers gegenüber dem Längsträger kann zweckmäßigerweise ein Dämpfer vorgesehen sein, wobei der Dämpfer bevorzugt mit einem unteren Ende wenigstens indirekt mit dem Achskörper oder dem Längslenker verbunden ist. Mit einem oberen Ende kann der Dämpfer dann bevorzugt wenigstens indirekt mit dem Längsträger verbunden sein. Auch dies ermöglicht eine konstruktiv einfache und zugleich stabile Ausgestaltung des Achsaggregats.

Eine weitere Platzersparnis lässt sich zudem erzielen, wenn das obere Ende des Dämpfers wenigstens im Bereich des oberen Endes des Dämpfers oberhalb des unteren Rands des Längsträgers angeordnet ist. Das obere Ende des Dämpfers kann dabei über eine Schwenkachse an dem Längsträger angebunden sein, so dass der Dämpfer gegenüber dem Längsträger schwenken kann. Dabei ist dann vorzugsweise die Schwenkachse des Dämpfers im Bereich der Schwenkachse oberhalb des unteren Rands des Längsträgers angeordnet. Mithin ist auch zur Anbindung des Dämpfers an den Längsträger ein Achsbock, wie er im Stand der Technik verwendet wird, entbehrlich. Dabei bietet es sich insbesondere an, wenn der Abstand zwischen dem oberen Ende des Dämpfers und dem unteren Rand des Längsträgers in vertikaler Richtung wenigstens 3 cm, vorzugsweise wenigstens 6 cm, insbesondere wenigstens 9 cm, beträgt. Auf diese Weise kann die Anbindung des Dämpfers an den Längsträger konstruktiv einfach und zugleich stabil erfolgen.

Besonders bevorzugt ist die Verwendung des beschriebenen Achsaggregats zusammen mit einem einfach und stabil ausgebildeten Längsträger. Ein solcher weist vorzugsweise einen unteren Rand auf, der sich wenigstens im Wesentlichen entlang einer vom unteren Rand definierten Ebene erstreckt. Dies muss aber nicht in allen Fällen zwingend für den gesamten Längsträger gelten. Bevorzugt ist es aus den genannten Gründen aber dennoch, wenn sich der untere Rand des Längsträgers im Bereich des Längslenker, des Dämpfers und/oder des Federelements sowie darüber hinaus über wenigstens 3m, vorzugsweise wenigstens 5 m, insbesondere wenigstens 8 m, wenigstens im Wesentlichen in einer gemeinsamen Ebene erstreckt. Dann ist der Längsträger wenigstens im Bereich des Achsaggregats und angrenzend dazu der Einfachheit halber mit einem gleichförmigen, geradlinigen unteren Rand versehen.

Unabhängig davon kann der untere Rand des Längsträgers wenigstens im Bereich der Schwenkachse des Längslenkers, des Federelements und/oder des oberen Endes des Dämpfers die Unterseite des Längsträgers bilden. Es wird mithin kein zusätzlicher Rand des Längsträgers zur Anbindung des Achsaggregats an den Längsträger benötigt.

Des Weiteren hat es sich aus konstruktiven und kostenmäßigen Gesichtspunkten bewährt, wenn der Längsträger als Längsträgerprofil ausgebildet ist, dessen unterer Rand durch einen unteren Gurt des Längsträgerprofils gebildet wird. Der Längsträger ist so besonders stabil und es können, insbesondere über das Federelement, hohe Kräfte sicher in den Längsträger eingeleitet werden.

Um ein stabiles und konstruktiv einfaches Achsaggregat bereitstellen zu können, bietet es sich an, den Längslenker und den Achskörper mittels eines Achslappens miteinander zu verbinden. Aus demselben Grund kann alternativ oder zusätzlich der Dämpfer und der Achskörper über einen Achslappen miteinander verbunden sein.

Aus Platzgründen ist es alternativ oder zusätzlich bevorzugt, wenn der Längslenker und der Dämpfer von einer Innenseite des Längsträgers an den Längsträger angebunden ist. Der Außenbereich des Längsträgers steht dann für andere Funktionen und Ausstattungen zu Verfügung.

Zur Aussteifung des Chassis kann dieses eine Mehrzahl von Querträgern aufweisen. Aus Platzgründen kann die Schwenkachse des Längslenkers und/oder das obere Ende des Dämpfers dann unterhalb der Querträger angeordnet sein. Dadurch wird das Schwenken des Längslenkers nicht durch die Querträger beeinträchtigt.

Zur Aussteifung des Chassis können zwei mittels der Querträger verbundene Längsträger vorgesehen sein. Dabei bietet es sich für den Federungskomfort an, wenn jedem Längsträger ein separates Achsaggregat umfassend einen Längslenker, ein Federelement und ein Dämpfer zugeordnet ist. Dies bietet sich insbesondere bei Fahrzeugsachsen an, die sich von einer Seite des Nutzfahrzeugs bis zur anderen Seite des Nutzfahrzeugs erstrecken.

Nachfolgend wird die Erfindung anhand einer lediglich ein Ausführungsbeispiel darstellenden Zeichnung näher erläutert. In der Zeichnung zeigt
- Fig. 1: ein von einer Zugmaschine gezogenes, erfindungsgemäßes Nutzfahrzeug mit erfindungsgemäßen Achsaggregaten in einer perspektivischen Ansicht und
- Fig. 2: ein Detail des Nutzfahrzeugs aus Fig. 1 im Bereich eines Achsaggregats in einer schematischen Schnittansicht von der Seite.

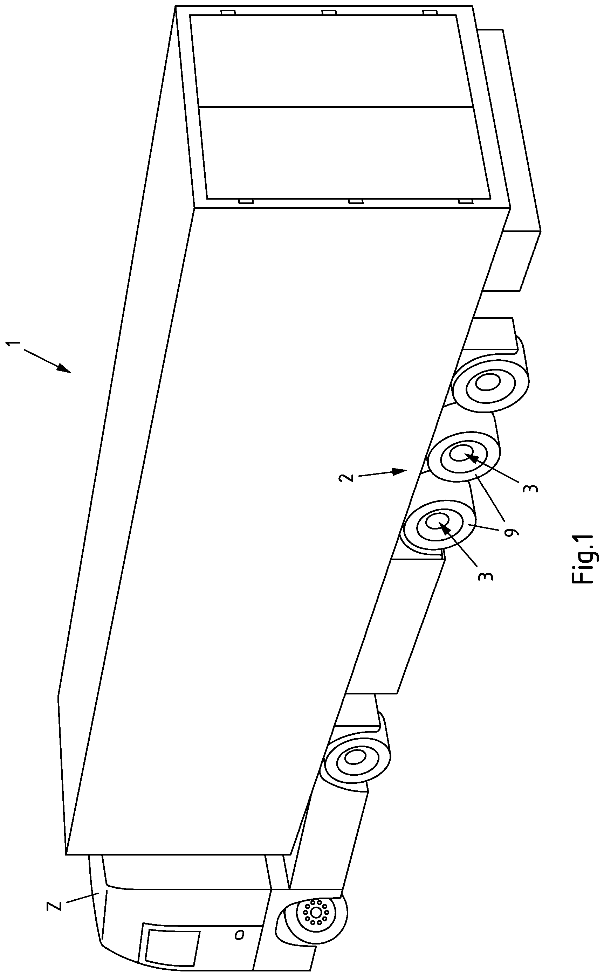

In der Fig. 1 ist ein von einer Zugmaschine Z gezogenes Nutzfahrzeug 1 in Form eines Sattelaufliegers dargestellt. Das Nutzfahrzeug 1 umfasst ein Fahrwerk 2, dass selbst wiederum drei Nutzfahrzeugachsen 3 aufweist, wobei auch eine andere Anzahl an Nutzfahrzeugachsen 3 denkbar ist.

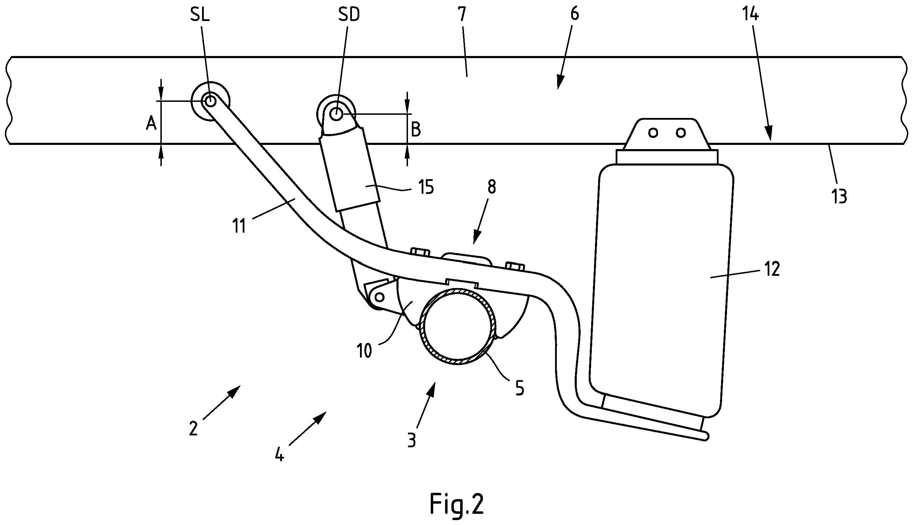

In der Fig. 2 ist eine Schnittansicht im Bereich eines Achsaggregats 4 des Fahrwerks 2 dargestellt. Jeder Nutzfahrzeugachse 3 des Nutzfahrzeugs 1 sind zwei Achsaggregate 4 zugeordnet, und zwar auf gegenüberliegenden Seiten der Nutzfahrzeugachse 3. Dabei ist es nicht zwingend erforderlich, dass die Nutzfahrzeugachse 3 ein von einer Seite zur gegenüberliegenden Seite durchgehendes Achsrohr 5 umfasst. Beispielsweise im Falle einer Einzelradaufhängung wird auf ein solch durchgehendes Achsrohr 5 verzichtet. Auch muss das Achsrohr 5 nicht zwingend im klassischen Sinne mit einem kreisförmigen Querschnitt rohrförmig ausgebildet sein. Die Achsaggregate 4 verbinden die Nutzfahrzeugachse 3 mit dem Chassis 6 des Nutzfahrzeugs 1, konkret mit den Längsträgern 7. Dabei umfassen die Achsaggregate 4 einen Teil der Nutzfahrzeugachse 3, nämlich einen Achskörper 8, der wenigstens dem Anbinden der Nutzfahrzeugachse 3 an das Chassis 6 dient. Der Achskörper 8 ist mit einem sogenannten Radkopf verbunden, welcher einen Radflansch zum Anschrauben eines Rads 9 aufweist und zudem regelmäßig eine Bremsscheibe umfasst. Letzteres ist aber nicht zwingend erforderlich. Die Radköpfe bilden dabei den Teil der Nutzfahrzeugachsen 3, die sich beim Verfahren des Nutzfahrzeugs 1 drehen. Die Achskörper 8 und gegebenenfalls das Achsrohr 5 der Nutzfahrzeugsachse 3 drehen sich dagegen nicht, wenn das Nutzfahrzeug 1 verfahren wird.

In der Fig. 2 ist ein Detail des Nutzfahrzeugs 1 in der Blickrichtung hinter einem Radkopf der Nutzfahrzeugachse 3 dargestellt. Radköpfe sind aus dem Stand der Technik bekannt und bedürfen daher vorliegend keiner eingehenderen Erläuterung. Zudem sind der besseren Anschaulichkeit halber weitere Bauteile des Nutzfahrzeugs 1 in der Fig. 2 weggelassen worden, welche vorliegend nicht von besonderer Bedeutung sind.

Die Schnittebene erstreckt sich durch den Achskörper 8, genauer gesagt durch das Achsrohr 5 des Achskörpers 8. Das Achsrohr 5 ist mit einem Achslappen 10 verbunden, der sich etwa über 180° des Umfangs des Achsrohrs 5 um das Achsrohr 5 herum erstreckt und in diesem Bereich an dem Achsrohr 5 anliegt sowie mit dem Achsrohr 5 verschweißt ist. Der Achslappen 10 ist dabei als Teil des Achskörpers 8 mit einem Längslenker 11 verschraubt, der sich quer zur Nutzfahrzeugachse 3 erstreckt und gegenüberliegende Enden bereitstellt, die auf gegenüberliegenden Seiten des Achskörpers 5 angeordnet sind. Der Achslappen 10 könnte aber auch anderes ausgebildet oder auch gänzlich weggelassen werden.

Das in der Fig. 2 rechts dargestellte Ende des Längslenkers 11, der sich etwa parallel zum zugehörigen Längsträger 7 des Chassis 6 erstreckt, ist mit einem Federelement 12 in Form eines Federbalgs einer Luftfederung verbunden. Das Federelement 12 stützt sich nach unten auf dem Längslenker 11 und nach oben am Chassis 6, konkret am Längsträger 7 des Chassis 6, und zwar am unteren Rand 13 des Längsträgers 7 ab. Der untere Rand 13 des Längsträgers 7 bildet die Unterseite des Längsträgers 7. Zudem ist der Längsträger 7 als Längsträgerprofil mit einem unteren Gurt 14 ausgebildet. Dieser untere Gurt 14 bildet dabei den unteren Rand 13 und damit die Unterseite des Längsträgers 7.

Das Federelement 12 stützt sich nach unten auf dem Längslenker 11 und nach oben am Längsträger 7 ab, wenn die Nutzfahrzeugachse 3 während der Fahrt einfedert. Dieses Einfedern wird dann durch das Federelement 12, genauer durch die Kompression der Druckluft im Federbalg, begrenzt. Bei dem dargestellten und insoweit bevorzugten Achsaggregat 4 ist der Längslenker 11 mit dem Federelement 12 verschraubt. Das Federelement 12 befindet sich bei dem dargestellten und insoweit bevorzugten Nutzfahrzeug 1 wenigstens im Wesentlichen zwischen dem Längslenker 11 und dem unteren Rand 13 des Längsträgers 7.

Das in der Fig. 2 links dargestellte Ende des Längslenkers 11 ist am Längsträger 7 festgelegt und abgestützt. Dabei ist der Längslenker 11 um eine Schwenkachse SL gegenüber dem Längsträger 7 schwenkbar gelagert, die sich wenigstens im Wesentlichen senkrecht zum Längsträger 7 erstreckt, und zwar derart, dass der Längslenker 11 beim Ein- und Ausfedern der Nutzfahrzeugachse 3 um den Längsträger 7 herum nach oben und unten schwenken kann. Die Schwenkachse SL ist dabei oberhalb des unteren Rands 13 des Längsträgers 7 vorgesehen. Der vertikale Abstand A zwischen der Schwenkachse SL und dem unteren Rand 13 des Längsträgers 7 beträgt bei dem dargestellten und insoweit bevorzugten Ausführungsbeispiel etwa 10 cm. Davon abweichende Abstände sind aber ebenfalls denkbar.

Zur Dämpfung der Schwingungen der Nutzfahrzeugachse 3 weist das Achsaggregat 4 einen Dämpfer 15 auf, der mit seinem Ende am Achslappen 10 befestigt ist. Der Dämpfer 15 ist mit seinem oberen Ende am Längsträger 7 befestigt, wobei das obere Ende des Dämpfers 15 oberhalb des unteren Rands 13 des Längsträgers 7 angeordnet ist. Das gegenüberliegende, untere Ende des Dämpfers 15 ist am Achslappen 10 festgelegt. Bei dem dargestellten und insoweit bevorzugten Dämpfer 15 handelt es sich um einen hydraulischen Dämpfer 15, der als Teleskopdämpfer ausgebildet ist. Der Dämpfer 15 ist dabei so an dem Längsträger 7 angebunden, dass der Dämpfer 15 beim Verschwenken des Längslenkers 11 um das obere Ende des Dämpfers 15 bzw. eine dort vorgesehene Schwenkachse SD schwenken kann. Der vertikale Abstand B zwischen dem oberen Ende des Dämpfers 15 oder dessen Schwenkachse SD einerseits und dem unteren Rand 13 des Längsträgers 7 andererseits beträgt bei dem dargestellten und insoweit bevorzugten Ausführungsbeispiel etwa 8 cm. Davon abweichende Abstände sind aber ebenfalls denkbar.

### Bezugszeichenliste

- 1: Nutzfahrzeug
- 2: Fahrwerk
- 3: Nutzfahrzeugachse
- 4: Achsaggregat
- 5: Achsrohr
- 6: Chassis
- 7: Längsträger
- 8: Achskörper
- 9: Rad
- 10: Achslappen
- 11: Längslenker
- 12: Federelement
- 13: Rand
- 14: Gurt
- 15: Dämpfer
- A: Abstand
- B: Abstand
- SD: Schwenkachse Dämpfer
- SL: Schwenkachse Längslenker
- Z: Zugmaschine

## Patentansprüche

1. Nutzfahrzeug (1), insbesondere Lastkraftwagen, Anhänger oder Sattelauflieger, mit einem wenigstens einen Längsträger (7) aufweisenden Chassis (6), mit einem mit einem Rad (9) verbundenen Achskörper (8), mit einem den Achskörper (8) gegenüber dem Längsträger (7) abstützenden Federelement (12) und mit einem sich quer zum Achskörper (8) erstreckenden und um eine Schwenkachse (SL) relativ zum Längsträger (7) auf und ab schwenkbaren Längslenker (11), wobei der Längslenker (11) wenigstens indirekt mit dem Längsträger (7), dem Achskörper (8) und dem Federelement (12) verbunden ist und wobei der Längsträger (7) einen unteren Rand (13) auf weist,
**dadurch gekennzeichnet, dass**
die Schwenkachse (SL) des Längslenkers (11) wenigstens im Bereich der Schwenkachse (SL) oberhalb des unteren Rands (13) des Längsträgers (7) angeordnet ist.

2. Nutzfahrzeug nach Anspruch 1,
**dadurch gekennzeichnet, dass**
der Abstand (A) zwischen der Schwenkachse (SL) und dem unteren Rand (13) des Längsträgers (7) in vertikaler Richtung wenigstens 3 cm, vorzugsweise wenigstens 6 cm, insbesondere wenigstens 9 cm, beträgt.

3. Nutzfahrzeug nach Anspruch 1 oder 2,
**dadurch gekennzeichnet, dass**
sich das Federelement (12) gegen den unteren Rand (13) des Längsträgers (7) abstützt und/oder dass das Federelement (12) als Federbalg ausgebildet ist.

4. Nutzfahrzeug nach einem der Ansprüche 1 bis 3,
**dadurch gekennzeichnet, dass**
das Federelement (12) wenigstens im Bereich des Federelements (12) wenigstens im Wesentlichen zwischen dem unteren Rand (13) des Längsträgers (7) und dem Längslenker (11) angeordnet ist.

5. Nutzfahrzeug nach einem der Ansprüche 1 bis 3,
**dadurch gekennzeichnet, dass** wenigstens ein Dämpfer (15) zum Dämpfen von Schwenkbewegungen des Längslenkers (11) gegenüber dem Längsträger (7) vorgesehen ist, dass der Dämpfer (15) mit einem unteren Ende wenigstens indirekt mit dem Achskörper (8) oder dem Längslenker (11) verbunden ist und dass der Dämpfer (15) mit einem oberen Ende wenigstens indirekt mit dem Längsträger (7) verbunden ist.

6. Nutzfahrzeug nach Anspruch 5,
**dadurch gekennzeichnet, dass**
das obere Ende des Dämpfers (15) wenigstens im Bereich des oberen Endes des Dämpfers (15) oberhalb des unteren Rands (13) des Längsträgers (7) angeordnet ist und dass, vorzugsweise, der Abstand (B) zwischen dem oberen Ende des Dämpfers (15) und dem unteren Rand (13) des Längsträgers (7) in vertikaler Richtung wenigstens 3 cm, vorzugsweise wenigstens 6 cm, insbesondere wenigstens 9 cm, beträgt.

7. Nutzfahrzeug nach einem der Ansprüche 1 bis 6,
**dadurch gekennzeichnet, dass**
sich der untere Rand (13) des Längsträgers (7) im Bereich des Längslenkers (11), des Dämpfers (15) und/oder des Federelements (12) sowie darüber hinaus über wenigstens 3m, vorzugsweise wenigstens 5 m, insbesondere wenigstens 8 m, wenigstens im Wesentlichen in einer gemeinsamen Ebene erstreckt.

8. Nutzfahrzeug nach einem der Ansprüche 1 bis 7,
**dadurch gekennzeichnet, dass**
der untere Rand (13) des Längsträgers (7) wenigstens im Bereich der Schwenkachse (SL) des Längslenkers (11), des Federelements (12) und/oder des oberen Endes des Dämpfers (15) die Unterseite des Längsträgers (7) bildet.

9. Nutzfahrzeug nach einem der Ansprüche 1 bis 8,
**dadurch gekennzeichnet, dass**
der Längsträger (7) als Längsträgerprofil ausgebildet ist und dass der untere Rand (13) des Längsträgers (7) von einem unteren Gurt (14) des Längsträgerprofils gebildet wird.

10. Nutzfahrzeug nach einem der Ansprüche 1 bis 9,
**dadurch gekennzeichnet, dass**
der Längslenker (11) und der Achskörper (8) mittels eines Achslappens (10) miteinander verbunden sind und/oder dass der Dämpfer (15) und der Achskörper (8) über einen Achslappen (10) miteinander verbunden sind.

11. Nutzfahrzeug nach einem der Ansprüche 1 bis 9,
**dadurch gekennzeichnet, dass**
der Längslenker (11) und der Dämpfer (12) von einer Innenseite des Längsträgers (7) an den Längsträger (7) angebunden ist.

12. Nutzfahrzeug nach einem der Ansprüche 1 bis 11,
**dadurch gekennzeichnet, dass**
das Chassis (6) eine Mehrzahl von Querträgern aufweist und dass die Schwenkachse (SL) des Längslenkers (11) und/oder das obere Ende des Dämpfers (15), insbesondere die Schwenkachse (SD) des oberen Endes des Dämpfers (15), unterhalb der Querträger angeordnet ist.

13. Nutzfahrzeug nach Anspruch 12,
**dadurch gekennzeichnet, dass**
zwei mittels der Querträger verbundene Längsträger (7) vorgesehen sind und dass jedem Längsträger (7), insbesondere pro Nutzfahrzeugachse (3), wenigstens ein Achsaggregat (4) umfassend einen Längslenker (11), ein Federelement (12) und ein Dämpfer (15) zugeordnet ist.
